(19) Europäisches Patentamt / European Patent Office / Office européen des brevets

(11) **EP 3 614 123 B1**

(12) **EUROPEAN PATENT SPECIFICATION**

(45) Date of publication and mention of the grant of the patent:
**12.07.2023 Bulletin 2023/28**

(21) Application number: **18783849.5**

(22) Date of filing: **09.04.2018**

(51) International Patent Classification (IPC):
**G01F 1/00** *(2022.01)*    **G01N 11/08** *(2006.01)*
**G01F 1/34** *(2006.01)*    G01N 11/00 *(2006.01)*

(52) Cooperative Patent Classification (CPC):
**G01F 1/34; G01F 1/00; G01N 11/08;**
G01N 2011/0026

(86) International application number:
**PCT/KR2018/004117**

(87) International publication number:
**WO 2018/190585 (18.10.2018 Gazette 2018/42)**

(54) **METHOD AND SYSTEM FOR MEASURING VISCOSITY IN CONTINUOUS FLOW FIELD**

VERFAHREN UND SYSTEM ZUR MESSUNG DER VISKOSITÄT IN EINEM FELD MIT KONTINUIERLICHEM FLUSS

PROCÉDÉ ET SYSTÈME POUR LA MESURE DE VISCOSITÉ DANS UN CHAMP D'ÉCOULEMENT CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2017 KR 20170048086**
**17.11.2017 KR 20170154237**

(43) Date of publication of application:
**26.02.2020 Bulletin 2020/09**

(73) Proprietor: **Industry-Academic Cooperation Foundation**
**Gyeongsang National University**
**Jinju-si, Gyeongsangnam-do 52828 (KR)**

(72) Inventors:
• **HWANG, Wook Ryol**
**Jinju-si**
**Gyeongsangnam-do 52827 (KR)**
• **JANG, Hye Gyeong**
**Jinju-si**
**Gyeongsangnam-do 52819 (KR)**

(74) Representative: **Müller Schupfner & Partner**
**Patent- und Rechtsanwaltspartnerschaft mbB**
**Schellerdamm 19**
**21079 Hamburg (DE)**

(56) References cited:
WO-A1-2015/168689    JP-A- 2015 522 162
KR-A- 20120 101 251    US-A1- 2006 179 956
US-A1- 2010 089 174    US-A1- 2016 188 766

• G. DELAPLACE ET AL: "Power Requirement when Mixing a Shear-Thickening Fluid with a Helical Ribbon Impeller Type", CHEMICAL ENGINEERING AND TECHNOLOGY, vol. 23, no. 4, April 2000 (2000-04), pages 329-335, XP055771231, DE ISSN: 0930-7516, DOI: 10.1002/(SICI)1521-4125(200004)23:4<329::AID-CEAT329>3.0.CO;2-0
• SON ET AL: "Determination of shear viscosity and shear rate from pressure drop and flow rate relationship in a rectangular channel", POLYMER, ELSEVIER SCIENCE PUBLISHERS B.V, GB, vol. 48, no. 2, 18 January 2007 (2007-01-18), pages 632-637, XP005824219, ISSN: 0032-3861, DOI: 10.1016/J.POLYMER.2006.11.048
• Metzner A. B. ET AL: "Agitation of Non-Newtonian Fluids", A.I.Ch.E. Journal, vol. 3, no. 1, 1 March 1957 (1957-03-01), pages 3-10, XP093027496,

**Description**

**FLOW** FIELD.

**BACKGROUND**

1. Technical Field

The present disclosure relates to a viscosity measurement method and system for a continuous flow field.

2. Related Art

Rheologically complex fluid such as polymer melt and solution, particle suspension, slurry and droplet system exhibits a complex viscosity change such as shear-thinning and yield stress through a hydrodynamic interaction with a microstructure, and is applied to various processes such as a chemical process, polymer processing, electronic material (display and secondary battery) processing, food processing, cosmetics processing, paint processing, water treatment and oil drilling.

An existing method for measuring the viscosity of such complex fluid basically takes a sample of the fluid and uses one of the following methods. A first method (i) may include putting the fluid between flat plates, applying a shearing force to one of the plates to measure a shear rate, and measuring the viscosity of the fluid through the relationship between the shearing force and the shear rate. A second method (ii) may include passing the fluid to a thin micro-tube with a simple circular or rectangular cross-section, and measuring the viscosity of the fluid using the relationship between pressure difference and flow rate.

However, since the above two methods are induced from the principle of conversation of momentum (force balance), the methods can be applied only to a very simple shape (circular plate, circular cross-section tube or rectangular slit).

In addition, there is the Metzner-Otto method as a flow quantification method based on an energy dissipation rate, which is applied as a scaling concept and empirical access only in flows in existing limited mixers. The Metzner-Otto method has been based on the supposition that there is an average shear rate representing the entire flow fields in a mixing system, has defined such a correlation that the average shear rate is proportional to the velocity of an impeller, and has defined an effective shear rate and effective viscosity of non-Newtonian fluid flowing in a mixer based on the fact that Newtonian fluid and non-Newtonian fluid have the same energy dissipation rate. The present disclosure has been developed to apply a quantification method based on an energy dissipation rate, which is similar to the Metzner-Otto method, to all continuous flow fields with an inlet and outlet. Examples of the related art may include Delaplace G. et al. (2000) "Power Requirement when Mixing a Shear-Thickening Fluid with a Helical Ribbon Impeller Type", in Chem. Eng. Technol. vol. 23, no. 4, pp. 329-336.

Other examples of the related art may include US Patent No. 6,412,337. According to this related art, the Metzner-Otto concept has been expanded to measure viscosity in a static mixer. The related art is also based on the fact that Newtonian fluid and non-Newtonian fluid have the same energy dissipation rate. However, the related art is based on the supposition that a viscosity model of fluid is power-law fluid, and discloses "connecting two static mixers" to measure a pressure drop and a flow rate, in order to find two kinds of coefficients of the power-law fluid, i.e. a consistency index and a power-law index. However, the present disclosure can measure viscosity through only one on-site operation of measuring a pressure drop and a flow rate in a flow field of arbitrary geometry, without deciding a viscosity model in advance. Therefore, the present invention is different from the above-described related art, and may have a much wider application range. When the application range is wide, it may indicate that the present disclosure can treat various viscosity models of fluid, and be applied to any types of general flow fields as well as a static mixer.

DISCLOSURE

Technical Problem

Various embodiments are directed to a method which can easily measure viscosity behaviors of fluid by calculating flow numbers in a continuous flow field of arbitrary geometry.

Also, various embodiments are directed to a method which can measure the viscosity of fluid through an on-site treatment in an actual system during an in-situ process in a continuous flow field of arbitrary geometry with at least one inlet and outlet.

**Technical Solution**

In a first aspect of the invention, a method for measuring viscosity is disclosed according to claim 1. Further preferential embodiments are disclosed according to claims 2-5. In a second aspect of the invention, a system for measuring a viscosity is disclosed according to claim 6. Further preferential embodiments are disclosed according to claims 7-8.

**Advantageous Effects**

In accordance with an embodiment of the present disclosure, it is possible to provide a method and/or system which can easily measure viscosity behaviors of fluid by calculating a flow number in a continuous flow field of arbitrary geometry and measuring only a flow rate and pressure drop using the flow number.
Furthermore, it is possible to provide a method and/or system which can measure the viscosity of fluid through an on-site treatment in an actual system during an in-situ process in a continuous flow field of arbitrary geometry with at least one inlet and outlet.

**BRIEF DESCRIPTION OF THE DRAWINGS**

FIG. 1 is a graph illustrating the relationship between shear rate and viscosity of rheologically complex fluid.

FIG. 2 is a conceptual view conceptually illustrating an example of a flow field with a single inlet and a single outlet.

FIG. 3 is a conceptual view conceptually illustrating an example of a flow field with a plurality of inlets and a single outlet.

FIG. 4 is a conceptual view conceptually illustrating an example of a flow field with a single inlet and a plurality of outlets.

FIG. 5 is a conceptual view schematically illustrating a configuration of a fluid viscosity measurement system in accordance with the claimed invention.

FIG. 6 illustrates that results obtained by calculating the viscosities of Carbopol 981 solution flows in circular pipes expanded/contracted at various ratios for the shear rate through simulations coincide with results obtained by calculating viscosities using only flow rate and pressure drop information based on a coefficient of energy dissipation rate and a coefficient of effective shear rate, which are calculated in advance.

FIG. 7A is a schematic view illustrating a specific shape of die.

FIG. 7B is a graph illustrating that results obtained by calculating the viscosities of flows of two kinds of non-Newtonian fluid models in the die illustrated in FIG. 7A for the shear rate through simulations coincide with results obtained by calculating viscosities using only flow rate and pressure drop information based on a coefficient of energy dissipation rate and a coefficient of effective shear rate, which are calculated in advance.

FIG. 8 is a conceptual view illustrating a configuration of a system for predicting a flow rate or pressure drop of non-Newtonian fluid in accordance with another aspect of another embodiment not part of the claimed invention.

FIG. 9 illustrates that results obtained by simulating pressure drops corresponding to random flow rates for flows in expanded/contracted circular pipes through flow analysis almost coincide with results obtained by predicting pressure drops corresponding to random flow rates using a method and/or system for predicting a flow rate or pressure drop of non-Newtonian fluid in accordance with an aspect of the another embodiment not part of the claimed invention.

FIG. 10 illustrates that results obtained by simulating pressure drops corresponding to random flow rates for flows in a "Kenics static mixer" through flow analysis almost coincide with the results obtained by predicting pressure drops corresponding to random flow rates using the method and/or system for predicting a flow rate or pressure drop of non-Newtonian fluid in accordance with the aspect of the another embodiment not part of the claimed invention.

FIG. 11 illustrates that results obtained by simulating pressure drops corresponding to random flow rates for flows in a "porous medium with a body-centered cubic (BCC) structure" through flow analysis almost coincide with the results obtained by predicting pressure drops corresponding to random flow rates using the method and/or system for predicting a flow rate or pressure drop of non-Newtonian fluid in accordance with the aspect of the another embodiment not part of the claimed invention.

**Mode for Invention**

Hereafter, specific embodiments will be described in detail with reference to the accompanying drawings. Moreover, detailed descriptions of well-known functions or configurations will be ruled out in order not to unnecessarily obscure subject matters of the present invention.

The terms of a singular form may include plural forms unless referred to the contrary. Furthermore, when a specific part "includes" or "comprises" a specific component, it indicates that the specific part does not exclude other components other than the specific component, but may further include the other components, unless referred to the contrary.

**Fluid Viscosity Measurement Method**

Hereafter, a fluid viscosity measurement method in accordance with an aspect of an embodiment of the present disclosure will be described in detail. The fluid viscosity measurement method in accordance with the aspect of the present embodiment relates to a method capable of measuring viscosity behaviors (viscosity, effective shear rate and relationship therebetween) of fluid or specifically non-Newtonian fluid by measuring only a flow rate and pressure drop of the actual fluid flowing in a specific shape of continuous flow field with an inlet and outlet like a pipe, when flow numbers are prepared, the flow numbers being obtained by quantifying flow characteristics of unspecified fluids flowing in the continuous flow field.

Such a fluid viscosity measurement method includes preparing flow numbers in a flow field; measuring a flow rate and pressure drop of fluid in the flow field; and calculating an average energy dissipation rate using the flow rate and the pressure drop, and deriving the viscosity of the fluid for an effective shear rate based on the average energy dissipation rate and the flow numbers in the flow field.

The flow characteristics of unspecified complex fluids flowing in a specific shape of flow field may be flow numbers which are quantified regardless of the types of fluids, i.e. a dimensionless number.The flow numbers in the flow field include a coefficient $K_p$ of energy dissipation rate and a coefficient $K_s$ of effective shear rate. The flow numbers in the flow field may be calculated through the relationship between Reynolds number Re and dimensionless number $N_p$ which can indicate energy dissipation for a specific shape of flow field. The preparing of the flow numbers in the flow field will be described below.

The measuring of the flow rate and pressure drop of the fluid in the flow field may include measuring the flow rate using a flow meter and measuring the pressure drop using a pressure gauge. The pressure drop may be calculated through a process of comparing pressures at the start and end points of a viscosity measurement section.

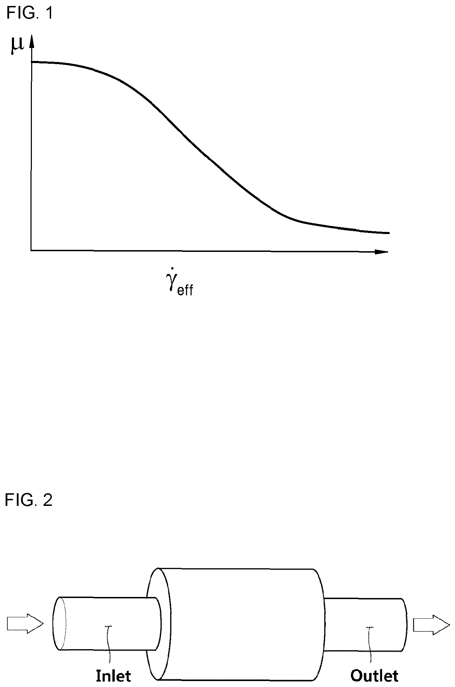

The deriving of the viscosity for the effective shear rate of the fluid includes deriving an effective shear rate $\dot{\gamma}_{eff}$ and a viscosity $\mu$ corresponding to the effective shear rate through Equations 1 and 2 below. The relationship between the effective shear rate $\dot{\gamma}_{eff}$ and the viscosity $\mu$ of the fluid may be the same as the relationship between the shear rate and the viscosity of the rheologically complex fluid in FIG. 1.

[Equation 1]

$$\mu(\dot{\gamma}_{eff}) = \frac{\epsilon}{K_p \cdot (\dot{\gamma}_{eff})^2}$$

[Equation 2]

$$\gamma_{eff} = K_s \cdot \gamma_{app}$$

In Equations 1 and 2, $\varepsilon$ represents the average energy dissipation rate of the flow field, $\dot{\gamma}_{eff}$ represents the effective shear rate of the flow field, $\mu(\dot{\gamma}_{eff})$ represents the viscosity of the fluid, $\dot{\gamma}_{app}$ represents an apparent shear rate of the flow field, $K_p$ represents the coefficient of energy dissipation rate, and $K_s$ represents the coefficient of effective shear rate.

The average energy dissipation rate $\varepsilon$ may be expressed as a value obtained by dividing the total energy dissipation rate by the volume of the flow field, and the total energy dissipation rate may be calculated based on the flow rate and pressure drop of the fluid in a laminar flow region. Therefore, the average energy dissipation rate $\varepsilon$ may be a function of the flow rate and pressure drop of the fluid and the volume of the flow field.

The apparent shear rate $\dot{\gamma}_{app}$ may be defined differently for each flow field, and selected by a researcher. For example, an apparent shear rate in a cross-section pipe with an inlet radius R may be defined as $\dot{\gamma}_{app} = 4Q/\pi R^3$. That is, the apparent shear rate may also be a function of the flow rate of the fluid.

The effective shear rate $\dot{\gamma}_{eff}$ is calculated by the apparent shear rate $\dot{\gamma}_{app}$ and the coefficient $K_p$ of energy dissipation rate which is one of the flow numbers decided according to a specific shape of flow field through Equation 2. Thus, when the flow field is decided, the effective shear rate $\dot{\gamma}_{eff}$ may be handled as a function of the flow rate of the fluid.

FIG. 2 is a conceptual view conceptually illustrating an example of a flow field with a single inlet and a single outlet.

In the flow field with the single inlet and the single outlet as illustrated in FIG. 2, a flow rate measured at any one position of the inlet and the outlet may be acquired as a flow rate value of fluid, a difference between pressure measured at the inlet and pressure measured at the outlet may be acquired as a pressure drop value of the fluid, and the product (total energy dissipation rate) of the acquired flow rate value and the acquired pressure drop value of the fluid may be divided by the volume of the flow field, in order to calculate the average energy dissipation rate $\overline{\varepsilon}$.

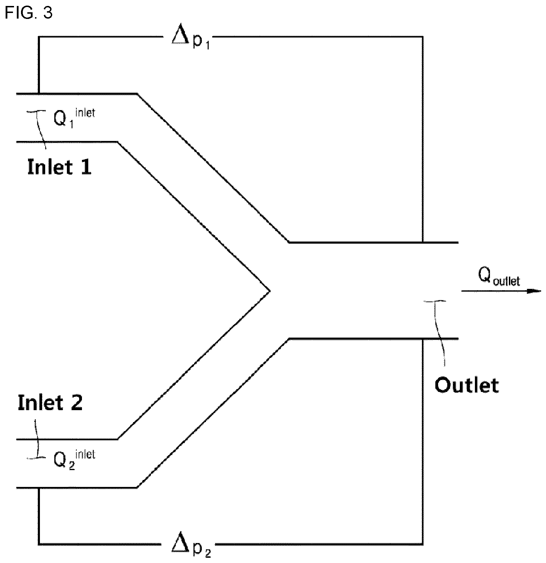

FIG. 3 is a conceptual view conceptually illustrating an example of a flow field with a plurality of inlets and a single outlet.

In the case of the flow field with the plurality of inlets and the single outlet as illustrated in FIG. 3, flow rates measured at the plurality of inlets may be acquired as flow rate values $Q_i^{inlet}$ ( $Q_1^{inlet}$ and $Q_2^{inlet}$ in case of flow field of FIG. 3) of fluid at the respective inlets, and differences between pressures measured at the plurality of inlets and pressure measured at the outlet may be acquired as pressure drop values $\Delta p_i$ ($\Delta p_1$ and $\Delta p_2$ in case of flow field of FIG. 3) of the fluid between the respective inlets and the single outlet. Based on the acquired flow rate values $Q_i^{inlet}$ of the fluid at the respective inlets and the pressure drop values $\Delta p_i$ of the fluid between the respective inlets and the single outlet, the total energy dissipation rate may be calculated through Equation A below.

[Equation A]

$$\sum_{i=1}^{n} \Delta p_i Q_i^{inlet} = total\ energy\ dissipation\ rate$$

In Equation A, n may represent the number of inlets, $\Delta p_i$ may represent the pressure drops of the fluid between the respective inlets and the single outlet, and $Q_i^{inlet}$ may represent the flow rates of the fluid at the respective inlets.

Then, the average energy dissipation rate $\overline{\varepsilon}$ may be calculated by dividing the calculated total energy dissipation rate by the volume of the flow field.

In the case of the flow field illustrated in FIG. 3, the apparent shear rate $\dot{\gamma}_{app}$ may be defined as a value obtained by dividing the flow rate $Q_i^{outlet}$ at the single outlet by the cross-sectional area at the single outlet.

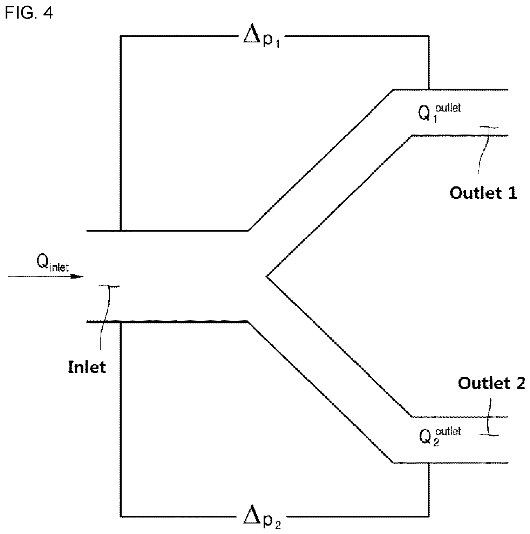

FIG. 4 is a conceptual view conceptually illustrating an example of a flow field with a single inlet and a plurality of outlets.

In the case of the flow field with the single inlet and the plurality of outlets as illustrated in FIG. 4, flow rates measured at the plurality of outlets may be acquired as flow rate values $Q_i^{outlet}$ ( $Q_1^{outlet}$ and $Q_2^{outlet}$ in case of flow field of FIG. 4) of fluid at the respective outlets, and differences between pressure measured at the single inlet and pressures measured at the plurality of outlets may be acquired as pressure drop values $\Delta p_i$ ($\Delta p_1$ and $\Delta p_2$ in case of flow field of FIG. 4) of the fluid between the respective outlets and the single inlet. Based on the acquired flow rate values $Q_i^{outlet}$ of the fluid at the respective outlets and the pressure drop values $\Delta p_i$ of the fluid between the respective outlets and the single inlet, the total energy dissipation rate may be calculated through Equation B below.

## [Equation B]

$$\sum_{i=1}^{n} \Delta p_i Q_i^{outlet} = \textit{total energy dissipation rate}$$

In Equation B, n may represent the number of outlets, $\Delta p_i$ may represent the pressure drops of the fluid between the single inlet and the respective outlets, and $Q_i^{outlet}$ may represent the flow rates of the fluid at the respective outlets.

Then, the average energy dissipation rate $\overline{\varepsilon}$ may be calculated by dividing the calculated total energy dissipation rate by the volume of the flow field.

In the case of the flow field illustrated in FIG. 4, the apparent shear rate $\dot{\gamma}_{app}$ may be defined as a value obtained by dividing the flow rate $Q_i^{inlet}$ at the single inlet by the cross-sectional area at the single inlet.

Hereafter, the preparing of the flow numbers in the flow field will be described.

The preparing of the flow numbers in the flow field may include acquiring the coefficient $K_p$ of energy dissipation rate in advance, and the coefficient $K_p$ of energy dissipation rate may be acquired for the corresponding flow field in advance. For example, the coefficient $K_p$ of energy dissipation rate may be acquired through an experimental method.

First, Newtonian fluid whose viscosity is known may be injected into the corresponding flow field system, i.e. the flow field with the specific shape, and a flow rate and pressure drop in a laminar flow region may be measured. For reference, the flow rate can be measured through a flow meter, and the pressure drop can be measured through a pressure gauge. The pressure drop may be calculated by comparing pressures at the start and end points of a specific section.

Then, the average energy dissipation rate may be calculated from the flow rate and pressure drop values in the laminar flow region and the volume of the flow field. For example, the average energy dissipation rate $\overline{\varepsilon}$ in the flow field which has the single inlet and the single outlet as illustrated in FIG. 2 may be expressed as a value obtained by dividing the product of the flow rate and the pressure drop in the laminar flow region by the volume of the flow field.

Then, two dimensionless numbers (Reynolds number Re and power number $N_p$) for quantifying flow characteristics based on the energy dissipation rate may be calculated based on the density, average velocity and viscosity of the Newtonian fluid, the characteristic length of the corresponding flow field, the apparent shear rate, and the average energy dissipation rate of the Newtonian fluid. For example, the two dimensionless numbers may be calculated as expressed by Equations 3 and 4 below.

## [Equation 3]

$$Re = \frac{\rho \cdot \overline{U} \cdot L}{\mu}$$

In Equation 3, $\rho$ may represent the density of the fluid, $\overline{U}$ may represent the average velocity of the fluid, L may represent the characteristic length of the flow field system, and $\mu$ may represent the viscosity of the fluid.

Specifically, the properties of the Newtonian fluid injected into the corresponding system may be used as the density $\rho$ of the fluid and the viscosity $\mu$ of the fluid in Equation 3. In Equation 3, the average velocity $\overline{U}$ may be obtained by dividing the flow rate by the cross-sectional area, and the characteristic length of the system may be changed depending on the shape of the flow field.

## [Equation 4]

$$N_p = \frac{\overline{\epsilon}}{\rho \cdot (\overline{U})^2 \cdot \dot{\gamma}_{app}}$$

In Equation 4, $\overline{\varepsilon}$ may represent the average energy dissipation rate of the flow field, and $\dot{\gamma}_{app}$ may represent the apparent shear rate of the flow field.

Specifically, the average energy dissipation rate $\overline{\varepsilon}$ of the flow field in Equation 4 may be calculated based on the volume of the flow field and the flow rate and pressure drop values of the Newtonian fluid, injected into the corresponding system, in the laminar flow region, and the apparent shear rate $\dot{\gamma}_{app}$ may be calculated based on the flow rate of the Newtonian fluid injected into the corresponding system.

In Equations 3 and 4, the values of the right sides are values which are already known or can be measured by related devices such as a velocity sensor. Thus, the Reynolds number Re and the power number $N_p$ may be calculated through the values.

Then, the coefficient $K_p$ of energy dissipation rate may be calculated through Equation 5 below, which indicates the relationship among the Reynolds number Re, the power number $N_p$ and the coefficient $K_p$ of energy dissipation rate. Equation 5 may indicate the relationship between the two dimensionless numbers, which is established in a laminar flow with a small Reynolds number.

[Equation 5]

$$N_p = \frac{K_p}{Re}$$

So far, it has been described that the coefficient $K_p$ of energy dissipation rate is calculated through the experimental method. However, the coefficient $K_p$ of energy dissipation rate may also be calculated through a numerical analysis method. For example, the Newtonian fluid which has been used in the experimental method may be used to calculate a velocity field in the corresponding flow field. Then, a local energy dissipation rate $\mu\gamma^2$ may be calculated by multiplying the viscosity of the Newtonian fluid by the square of a shear rate at a micro point of the flow field, and integrated for the entire flow field to calculate the total energy dissipation rate. In another embodiment, the average energy dissipation rate may be calculated by dividing the calculated total energy dissipation rate by the volume of the flow field, and then used to calculate the coefficient $K_p$ of energy dissipation rate. After the average energy dissipation rate is calculated, the same method as the above-described experimental method may be used. That is, the Reynolds number and the power number may be calculated through the information including the calculated average energy dissipation rate, and the coefficient $K_p$ of energy dissipation rate may be calculated based on the relationship among the Reynolds number, the power number and the coefficient $K_p$ of energy dissipation rate.

The preparing of the flow numbers in the flow field may include acquiring the coefficient $K_s$ of effective shear rate in advance, and the coefficient $K_s$ of effective shear rate may also be acquired for the corresponding flow field system in advance. For example, the coefficient $K_s$ of effective shear rate may be acquired through an experimental method.

First, non-Newtonian fluid (xanthan gum solution or the like) whose viscosity behavior (viscosity-effective shear rate relationship) is known may be injected into the corresponding system, i.e. the flow field with the specific shape, and a flow rate and pressure drop may be measured. The viscosity behavior (viscosity-effective shear rate relationship) of the non-Newtonian fluid may be expressed as illustrated in FIG. 1, for example.

Then, the average energy dissipation rate $\overline{\varepsilon}$ and the power number $N_p$ of the non-Newtonian fluid may be calculated from the flow rate and pressure drop values in the laminar flow region.

Specifically, the average energy dissipation rate $\overline{\varepsilon}$ of the non-Newtonian fluid may be calculated based on the volume of the flow field and the flow rate and pressure drop values of the non-Newtonian fluid, injected into the corresponding system, in the laminar flow region. Furthermore, the power number $N_p$ may be calculated through Equation 4 based on the density $\rho$ of the non-Newtonian fluid injected into the corresponding system, the average energy dissipation rate $\overline{\varepsilon}$ of the non-Newtonian fluid, calculated based on the flow rate of the non-Newtonian fluid in the laminar flow region, the apparent shear rate $\dot{\gamma}_{app}$ and the average velocity $\overline{U}$.

[Equation 4]

$$N_p = \frac{\overline{\epsilon}}{\rho \cdot (\overline{U})^2 \cdot \dot{\gamma}_{app}}$$

Then, a Reynolds number may be found, which corresponds to the power number $N_p$ of the Newtonian fluid having the same value as the power number $N_p$ calculated as described above. The Reynolds number at this time may be an effective Reynolds number $Re_{eff}$ of the complex fluid. The relationship between the power number $N_p$ of the Newtonian fluid and the Reynolds number Re corresponding to the power number $N_p$ may be defined by the coefficient $K_p$ of energy dissipation rate and Equation 5.

Then, the viscosity may be calculated through the effective Reynolds number $Re_{eff}$, the density and average velocity of the non-Newtonian fluid and the characteristic length of the flow field. For example, the above-described Equation 3 may be used. The viscosity calculated in this way may be the effective viscosity $\mu_{eff}$ of the complex fluid.

[Equation 3]

$$Re = \frac{\rho \cdot \overline{U} \cdot L}{\mu}$$

In Equation 3, $\rho$ may represent the density of the fluid, $\overline{U}$ may represent the average velocity of the fluid, L may represent the characteristic length of the flow field system, and $\mu$ may represent the viscosity of the fluid.

Specifically, the effective Reynolds number $Re_{eff}$ may be used as the Reynolds number Re, and the density of the non-Newtonian fluid injected into the corresponding system may be used as the density $\rho$ of the fluid. The average velocity $\overline{U}$ may be obtained by dividing the flow rate by the cross-sectional area, and the characteristic length of the system may be changed depending on the shape of the flow field.

Then, an effective shear rate $\dot{\gamma}_{eff}$ may be found through the viscosity behavior (viscosity-effective shear rate relationship) of the complex fluid from the effective viscosity.

Finally, the relationship between the effective shear rate and the apparent shear rate, that is, the above-described Equation 2 may be used to find the coefficient $K_s$ of effective shear rate.

[Equation 2]

$$\dot{\gamma}_{eff} = K_s \cdot \dot{\gamma}_{app}$$

In Equation 2, $\overline{\varepsilon}$ may represent the average energy dissipation rate of the flow field, $\dot{\gamma}_{eff}$ may represent the effective shear rate of the flow field, $\mu(\dot{\gamma}_{eff})$ may represent the viscosity of the fluid, $\dot{\gamma}_{app}$ represents the apparent shear rate of the flow field, $K_p$ may represent the coefficient of energy dissipation rate, and $K_s$ may represent the coefficient of effective shear rate.

The coefficient $K_s$ of effective shear rate may also be calculated through the numerical analysis method. For example, the non-Newtonian fluid whose viscosity behavior is known may be used to perform flow analysis in the flow field. Then, a local energy dissipation rate $\mu\gamma^2$ may be calculated by multiplying the viscosity of the non-Newtonian fluid by the square of a shear rate at a micro point in the flow field, and then integrated for the entire flow field to calculate the total energy dissipation rate. Then, the average energy dissipation rate may be calculated by dividing the total energy dissipation rate calculated as described above by the volume of the flow field, and the power number may also be calculated through Equation 4.

[Equation 4]

$$N_p = \frac{\overline{\epsilon}}{\rho \cdot (\overline{U})^2 \cdot \dot{\gamma}_{app}}$$

In Equation 4, $\rho$ may represent the density of the fluid, $\overline{U}$ may represent the average velocity of the fluid, $\overline{\varepsilon}$ may represent the average energy dissipation rate of the flow field, and $\dot{\gamma}_{app}$ may represent the apparent shear rate of the flow field. Specifically, the density of the non-Newtonian fluid may be used as the density $\rho$ of the fluid in Equation 4, and results derived through information such as the flow rate and the pressure drop, which can be acquired through flow analysis using a simulation, may be used as the average velocity $\overline{U}$ and the apparent shear rate $\dot{\gamma}_{app}$ of the fluid.

After the average energy dissipation rate and the power number are calculated, the same method as the above-described experimental method may be used. That is, a Reynolds number may be found, which corresponds to the

power number $N_p$ of the Newtonian fluid having the same value as the calculated power number $N_p$. The Reynolds number at this time may be an effective Reynolds number $Re_{eff}$ of the complex fluid. Then, the viscosity may be calculated through the effective Reynolds number and Equation 3.

[Equation 3]

$$Re = \frac{\rho \bullet \overline{U} \bullet L}{\mu}$$

In Equation 3, $\rho$ may represent the density of the fluid, $\overline{U}$ may represent the average velocity of the fluid, L may represent the characteristic length of the flow field system, and $\mu$ may represent the viscosity of the fluid. Specifically, the density of the non-Newtonian fluid may be used as the density $\rho$ of the fluid in Equation 3, and a result derived through information such as the flow rate and the pressure drop, which can be acquired through flow analysis using a simulation, may be used as the average velocity $\overline{U}$ of the fluid.

The viscosity calculated in this way may be the effective viscosity $\mu_{eff}$ of the complex fluid. Then, the effective shear rate $\dot{y}_{eff}$ may be found from the effective viscosity through the viscosity behavior (viscosity-effective shear rate relationship) of the complex fluid. Finally, the coefficient $K_s$ of effective shear rate may be found through Equation 2.

The coefficient $K_p$ of energy dissipation rate and the coefficient $K_s$ of effective shear rate, which have been described above, may be a kind of flow numbers which do not have very much to do with the rheological properties of the fluid, and are related only to the shape of the system (flow field). Therefore, once the coefficient of energy dissipation rate and the coefficient of effective shear rate are calculated for a specific shape of flow field in advance, the flow characteristics of various complex fluids can be quantified afterwards.

### Fluid Viscosity Measurement System

Hereafter, a fluid viscosity measurement system in accordance with another aspect of the embodiment of the present disclosure will be described. The fluid viscosity measurement system 100 can measure viscosity behaviors (viscosity, effective shear rate and relationship therebetween) of fluid or specifically non-Newtonian fluid by measuring only a flow rate and pressure drop of the actual fluid flowing in a specific shape of continuous flow field F having an inlet and outlet, when flow numbers are prepared, the flow numbers being obtained by quantifying the flow characteristics of unspecified fluids flowing in the continuous flow field F. The fluid viscosity measurement system 100 may used the above-described fluid viscosity measurement method.

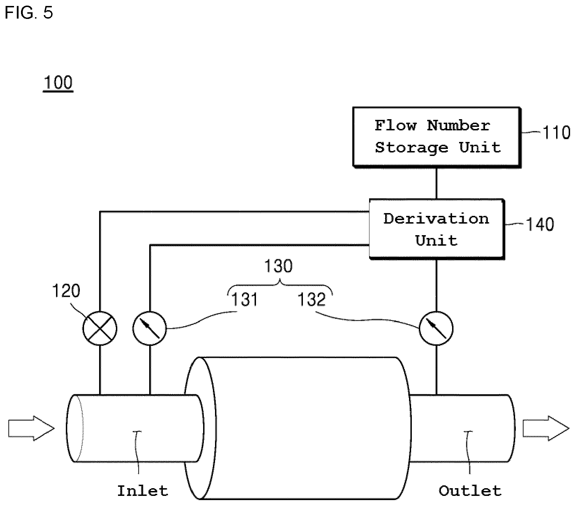

FIG. 5 is a conceptual view schematically illustrating a configuration of the fluid viscosity measurement system in accordance with another aspect of the embodiment of the present disclosure.

Referring to FIG. 5, the fluid viscosity measurement system 100, which measures viscosity in a specific shape of continuous flow field F having an inlet and outlet, may include a flow number storage unit 110 configured to store flow numbers in the flow field F; a flow rate measurement unit 120 configured to measure a flow rate of the fluid in the flow field F; a pressure measurement unit 130 configured to calculate a pressure drop in the flow field F; and a derivation unit 140 configured to calculate an average energy dissipation rate using the measured flow rate and pressure drop, and derive the viscosity of the fluid for an effective shear rate based on the average energy dissipation rate and the flow numbers in the flow field F.

FIG. 5 illustrates an example in which the fluid viscosity measurement system 100 is applied to the continuous flow field F having the single inlet and the single outlet as illustrated in FIG. 2. However, the shape of the continuous flow field to which the fluid viscosity measurement system 100 can be applied is not limited thereto. That is, the fluid viscosity measurement system 100 may also be applied to the continuous flow field having the plurality of inlets and the single outlet and the continuous flow field having the single inlet and the plurality of outlets as illustrated in FIGS. 3 and 4. Furthermore, although not illustrated, the fluid viscosity measurement system 100 may also be applied to a continuous flow field having a plurality of inlets and a plurality of outlets. In addition, the fluid viscosity measurement system 100 may also be applied to a continuous flow field having a complex cross-section as well as a continuous flow field having a simple cross-section such as a circular cross-section.

For convenience of description, the following descriptions will be focused on the example in which the fluid viscosity measurement system 100 is applied to the continuous flow field F having the single inlet and the single outlet as illustrated in FIG. 2.

The flow number storage unit 110 may store information on flow numbers obtained by quantifying the flow characteristics of unspecified fluids flowing in a specific shape of flow field with an inlet and outlet (for example, a circular cross-section pipe). The flow number storage unit 110 may be implemented as a nonvolatile memory, volatile memory, flash memory, hard disk drive (HDD) or solid state drive (SSD), which can store various data. The flow numbers of the flow field may include a coefficient $K_p$ of energy dissipation rate and/or a coefficient $K_s$ of effective shear rate for the corresponding flow field system, and be prepared through the preparing of the flow numbers in the flow viscosity measurement method. Since the preparing of the flow numbers in the flow viscosity measurement method has been described above, the detailed descriptions thereof are omitted herein.

The flow rate measurement unit 120 may measure a flow rate of the fluid in the flow field F, which is information serving as the basis for calculating an average energy dissipation rate. The flow rate measurement unit 120 may include a flow meter disposed at one or more of the inlet and the outlet, and measure the flow rate of the fluid in the flow field F through the flow meter.

The pressure measurement unit 130 may measure pressure at the inlet and/or outlet of the flow field F, in order to calculate a pressure drop in the flow field F, which is the information for calculating the average energy dissipation rate. The pressure drop of the flow field F may be calculated based on a difference between the pressures measured at the inlet and the outlet of the flow field F through the pressure measurement unit 130.

The pressure measurement unit 130 may include at least a first pressure sensor 131 disposed at the inlet. When a die installed in an extruder or injection machine which is used for processing polymer such as plastic is set to a continuous flow field as the target of viscosity measurement, pressure at an outlet of the die may correspond to the atmospheric pressure. Therefore, the pressure drop of the flow field F may be calculated by comparing the pressure at the inlet, measured by the first pressure sensor 131, to the pressure at the outlet, which is the atmospheric pressure information prepared in advance.

When the pressure at the outlet is not the atmospheric pressure, the pressure measurement unit 130 may further include a second pressure sensor 132 disposed at the outlet. The pressure drop in the flow field F may be calculated by comparing the pressure at the inlet, measured by the first pressure sensor 131, to the pressure at the outlet, measured by the second pressure sensor 132.

The derivation unit 140 may calculate an average energy dissipation rate by using and processing the flow rate measured by the flow rate measurement unit 120 and the pressure drop information which may be calculated through the pressure measurement unit 130, and derive the viscosity of the fluid for the effective shear rate by using and processing the information on the flow numbers in the flow field F, stored in the flow number storage unit 110. The derivation unit 140 may be a program module or software including a computing algorithm for generating new data by using and processing the various pieces of information stored in the flow number storage unit 110 and the various pieces of information measured through the flow rate measurement unit 120 and/or the pressure measurement.

The derivation unit 140 may derive the viscosity of the fluid for the effective shear rate through the deriving of the viscosity of the fluid for the effective shear rate in the fluid viscosity measurement method. That is, since the deriving of the viscosity of the fluid for the effective shear rate can be performed through Equations 1 and 2 and have been described above, the detailed descriptions thereof are omitted herein.

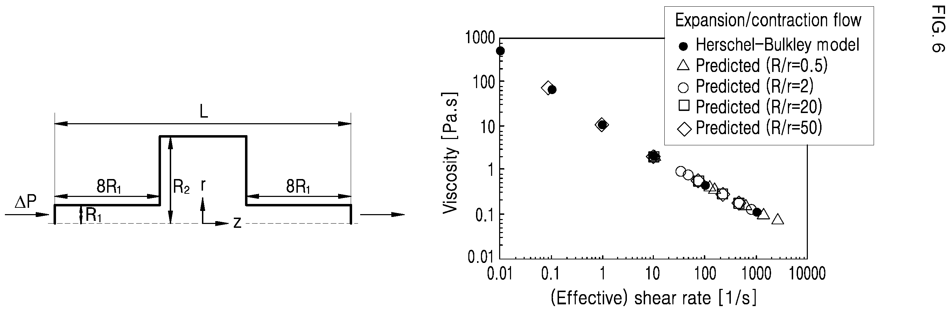

FIG. 6 illustrates that results obtained by calculating the viscosities of Carbopol 981 solution flows in circular pipes expanded/contracted at various ratios for the shear rate through simulations coincide with results obtained by calculating viscosities using only the flow rate and pressure drop information based on the coefficient of energy dissipation rate and the coefficient of effective shear rate, which are calculated in advance. In particular, the graph on the right side illustrates the actual viscosity behavior of Carbopol 981 0.2wt% solution and viscosities predicted through the method in accordance with the embodiment of the present disclosure. The graph shows that, when the coefficients of energy dissipation rate for the respective extraction/contraction ratios are calculated to predict the viscosities even though the extraction/contraction ratios are different, the actual viscosity behaviors can be accurately predicted. For reference, the Carbopol 981 solution is a representative example of non-Newtonian fluid which exhibits yield stress and shear-thinning at the same time.

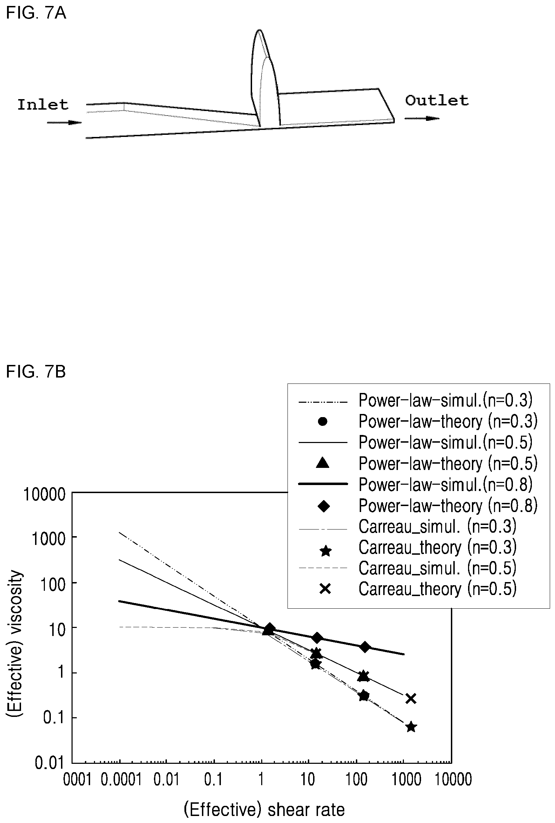

FIG. 7A is a schematic view illustrating a specific shape of die, and FIG. 7B is a graph illustrating that results obtained by calculating the viscosities of flows of two kinds of non-Newtonian fluid models in the die illustrated in FIG. 7A for the shear rate through simulations coincide with results obtained by calculating viscosities using only the flow rate and pressure drop information based on the coefficient of energy dissipation rate and the coefficient of effective shear rate, which are calculated in advance. Specifically, FIG. 7A illustrates a specific shape of die having a single inlet and a single outlet. In FIG. 7B, results obtained by calculating the viscosities of the two kinds of non-Newtonian fluid models (power-law and Carreau) for the shear rate, through a simulation using a program based on a finite element method (FEM), are indicated by solid lines, and results obtained by calculating viscosities for the shear rate using only the flow rate and pressure drop information based on the coefficient of energy dissipation rate and the coefficient of effective shear rate, which are calculated for the corresponding die in advance, are indicated by points. FIG. 7B shows that the results obtained by calculating the viscosities for the shear rate, which are derived through the simulation, coincide with the results obtained by calculating the viscosities for the shear rate, which are derived in accordance with the embodiment of the present disclosure.

**Method for Predicting Flow Rate** or **Pressure Drop of Fluid**

Hereafter, a method for predicting a flow rate or pressure drop of non-Newtonian fluid in accordance with an aspect of another embodiment not part of the claimed invention be described in detail. The method for predicting a flow rate or pressure drop of non-Newtonian fluid in accordance with the aspect of the another embodiment not part of the claimed invention relates to a method capable of predicting a flow rate or pressure drop of actual non-Newtonian fluid which flows in a specific shape of flow field having an inlet and outlet like a pipe, when flow numbers obtained by quantifying flow characteristics of unspecified fluids flowing in the flow field and viscosity behaviors (viscosity, effective shear rate and relationship therebetween) of the non-Newtonian fluid are prepared in advance.

The method for predicting a flow rate or pressure drop of non-Newtonian fluid may include preparing flow numbers in a flow field; preparing viscosity behavior information of the non-Newtonian fluid; and deriving any one piece of information between the flow rate and the pressure drop of the non-Newtonian fluid in the flow field from the other piece of information, based on the flow numbers in the flow field and the viscosity behavior information of the non-Newtonian fluid. Hereafter, the deriving of the any one piece of information between the flow rate and the pressure drop of the non-Newtonian fluid in the flow field from the other piece of information will be referred to as 'the deriving of the any one piece of information'. Specifically, when the flow rate of the non-Newtonian fluid is decided, a pressure drop corresponding to the flow rate may be predicted. Alternatively, when the pressure drop of the non-Newtonian fluid is decided, a flow rate corresponding to the pressure drop may be predicted.

The flow characteristics of unspecified complex fluids flowing in a specific shape of flow field may be flow numbers quantified regardless of the types of fluids, i.e. dimensionless numbers. The flow numbers in such a flow field may include a coefficient $K_p$ of energy dissipation rate and/or a coefficient $K_s$ of effective shear rate. The flow numbers in such a flow field may be calculated through the relationship between a dimensionless number $N_p$ and a Reynolds number Re, which can indicate energy dissipation for a specific shape of flow field. Since the preparing of the flow numbers in the flow field is performed in substantially the same manner as the preparing of the flow numbers in the flow field in the above-described fluid viscosity measurement method, the detailed descriptions thereof are omitted herein.

The preparing of the viscosity behavior information of the non-Newtonian fluid may include preparing the viscosity behavior curve of FIG. 1, which shows the viscosity-effective shear rate relationship. Such a viscosity behavior curve may be obtained through a viscosity measurement device.

The deriving of the any one piece of information may be performed through one or more of Equations 6, 7 and 8 below. The equations which will be described after Equation 6 may be the same as the equations described above. For convenience of description, however, the equations will be expressed as new equations.

[Equation 6]

$$N_p = \frac{P/V}{\rho \cdot (\overline{U})^2 \cdot \dot{\gamma}_{app}}$$

[Equation 7]

$$N_p = \frac{K_p}{Re}$$

[Equation 8]

$$\dot{\gamma}_{eff} = K_s \cdot \dot{\gamma}_{app}$$

In Equations 6 to 8, $N_p$ may represent a power number, P may represent the product of the flow rate and the pressure drop as total stress power, $\dot{\gamma}_{app}$ may represent an apparent shear rate of the flow field, $\dot{\gamma}_{eff}$ may represent an effective shear rate of the flow field, Re may represent the Reynolds number, $K_p$ may represent the coefficient of energy dissipation rate, and $K_s$ may represent the coefficient of effective shear rate.

The deriving of the any one piece of information may include calculating the effective shear rate using the relationship between the apparent shear rate $\dot{\gamma}_{app}$ and the coefficient $K_s$ of effective shear rate derived through the flow characteristics of the flow field. The apparent shear rate $\dot{\gamma}_{app}$ may indicate a function of the flow rate of the non-Newtonian fluid flowing in the flow field. The relationship between the apparent shear rate $\dot{\gamma}_{app}$ and the coefficient $K_s$ of effective shear rate may be defined as Equation 8, and the effective shear rate $\dot{\gamma}_{eff}$ may be derived through Equation 8. The

effective shear rate $\dot{\gamma}_{eff}$ may be derived as a function of the flow rate of the non-Newtonian fluid like the apparent shear rate $\dot{\gamma}_{app}$.

Then, an effective viscosity may be calculated through the derived effective shear rate and the prepared viscosity behaviors (viscosity-effective shear rate relationship and viscosity behavior curve) of the non-Newtonian fluid. The effective viscosity may be represented by $\mu_{eff}$. The effective viscosity $\mu_{eff}$ may also indicate a function of the flow rate of the non-Newtonian fluid like the effective shear rate $\dot{\gamma}_{eff}$.

Then, an effective Reynolds number may be calculated based on the relationship between the average velocity, density and viscosity of the fluid and the characteristic length of the flow field, and the derived effective viscosity. The relationship between the average velocity, density and viscosity of the fluid and the characteristic length of the flow field may be defined as Equation 9.

[Equation 9]

$$Re = \frac{\rho \cdot \overline{U} \cdot L}{\mu}$$

In Equation 9, $\rho$ may represent the density of the fluid, $\overline{U}$ may represent the average velocity of the fluid, L may represent the characteristic length of the flow field system, and $\mu$ may represent the viscosity of the fluid. The average velocity $\overline{U}$ of the fluid may be obtained by dividing the flow rate of the fluid by the cross-sectional area, and the characteristic length of the flow field system may be changed depending on the shape of the flow field.

In Equation 9, the density $\rho$ of the fluid may be decided according to the type of the non-Newtonian fluid, the characteristic length L of the flow field may be decided according to the shape of the flow field, and the effective viscosity $\mu_{eff}$ may indicate a function of the flow rate of the fluid as the average velocity $\overline{U}$ of the fluid and the viscosity $\mu$ of the fluid. Therefore, the effective Reynolds number $Re_{eff}$ derived as the Reynolds number Re may also indicate a function of the flow rate of the fluid.

Then, the prepared coefficient $K_s$ of effective shear rate in the flow field and the previously derived effective Reynolds number $Re_{eff}$ may be used to calculate a power number. Specifically, the power number may be derived through Equation 7.

Since the previously derived effective Reynolds number $Re_{eff}$ may be used as the Reynolds number Re in Equation 7, the power number $N_p$ derived through the Reynolds number Re may also indicate a function of the flow rate of the fluid.

Then, the average velocity, density and apparent shear rate of the fluid, the volume of the fluid in the fluid field, and the derived power number may be used to calculate the total stress power. Specifically, Equation 6 may be used.

In Equation 6, the density $\rho$ of the fluid may be decided according to the type of the non-Newtonian fluid, the volume of the fluid may be decided according to the shape of the flow field, and the average velocity $\overline{U}$, the apparent shear rate $\dot{\gamma}_{app}$ and the power number $N_p$ of the fluid may be functions of the flow rate of the fluid as described above. Therefore, the total power P for stress, derived through Equation 6, may also indicate a function of the flow rate of the fluid.

The total power P for stress may be expressed as the product of the pressure drop and the flow rate of the fluid as expressed by Equation 10.

[Equation 10]

$$P = \triangle p \cdot Q$$

In Equation 10, P may represent the total power P for stress, $\triangle p$ may represent the pressure drop of the fluid, and Q may represent the flow rate of the fluid.

Therefore, when there is established an equation indicating that the total power P for stress, derived through Equation 6, is equal to the total power P for stress, derived through Equation 10, the corresponding equation may be arranged as an equation which includes a constant number decided by the shape of the flow field, the flow characteristics in the flow field, and the viscosity behavior of the non-Newtonian fluid, and variable numbers such as the pressure drop and flow rate of the fluid. That is, the relationship between pressure drop and flow rate of specific non-Newtonian fluid in the corresponding flow field can be derived.

For example, the relationship between pressure drop and flow rate of non-Newtonian fluid flowing in a general flow field system having a characteristic length L and the entire volume V may be derived as expressed by Equation 11

below.

[Equation 11]

$$\triangle p = \frac{K_p \overline{VU} \dot{\gamma}_{app}}{QL} \mu_{eff}$$

In Equation 11, $\triangle p$ may represent the pressure drop of the fluid, Q may represent the flow rate of the fluid, $K_p$ may represent the coefficient of energy dissipation rate, V may represent the volume of the flow field, L may represent the characteristic length of the flow field, $\overline{U}$ may represent the average velocity of the fluid, $\dot{\gamma}_{app}$ may represent the apparent shear rate, and $\mu_{eff}$ may represent the effective viscosity.

Therefore, when the flow rate of the non-Newtonian fluid in the corresponding flow field system is decided, the pressure drop of the non-Newtonian fluid, corresponding to the flow rate, may be derived.

On the contrary, when the pressure drop of the non-Newtonian fluid in the corresponding flow field system is decided, the flow rate of the non-Newtonian fluid, corresponding to the pressure drop, may be derived. However, Equation 11 is derived based on the function of the flow rate of the non-Newtonian fluid, and the variable numbers on the right side include a plurality of variable numbers related to the function of the flow rate of the non-Newtonian fluid. Therefore, a computing device, software or numerical analysis tool including an algorithm capable of finding a flow rate solution related to the variable numbers may be used. In addition to such a tool, another method may be used to derive the flow rate of the non-Newtonian fluid. The method may include arranging random flow rates of the non-Newtonian fluid and pressure drops corresponding to the flow rates as table data through Equation 11, and finding flow rate information corresponding to specific pressure drop information of the non-Newtonian fluid based on the arranged data.

Based on Equation 11, the relationship between pressure drop and flow rate in a flow field formed in a simple circular pipe having a radius R and the entire volume V may be derived as Equation 12.

[Equation 12]

$$\triangle p = (2K_p \mu_{eff} V/\pi^2 R^6) Q, \mu_{eff} = \mu(\dot{\gamma}_{eff}), \dot{\gamma}_{eff} = K_s \cdot \dot{\gamma}_{app}$$

**System for Predicting Flow Rate or Pressure Drop of Fluid**

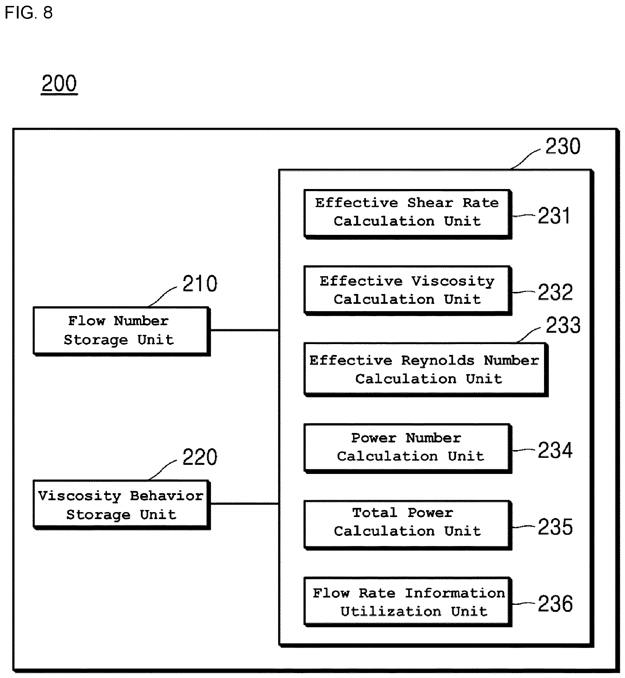

FIG. 8 is a conceptual view illustrating a configuration of a system for predicting a flow rate or pressure drop of non-Newtonian fluid in accordance with another aspect of the another embodiment not part of the claimed invention. J

The system for predicting a flow rate or pressure drop of non-Newtonian fluid (hereafter, also referred to as 'prediction system') in accordance with the another aspect of the another embodiment not part of the claimed invention relates to a system capable of predicting a flow rate or pressure drop of non-Newtonian fluid which flows in a specific shape of flow field having an inlet and outlet like a pipe, when flow numbers obtained by quantifying flow characteristics of unspecified fluids flowing in the flow field and viscosity behaviors (viscosity, effective shear rate and relationship therebetween) of the non-Newtonian fluid are prepared in advance.

Such a prediction system may use the above-described method for predicting a flow rate or pressure drop of non-Newtonian fluid in accordance with the aspect of another embodiment not part of the claimed invention. Since the roles of components included in the prediction system may correspond to the technical contents of the plurality of steps included in the method for predicting a flow rate or pressure drop of non-Newtonian fluid in accordance with the aspect of the another embodiment not part of the claimed invention, the detailed descriptions thereof are omitted herein.

The prediction system 200 may include a flow number storage unit 210 configured to store flow numbers in a flow field; a viscosity behavior information storage unit 220 configured to store viscosity behavior information of non-Newtonian fluid; and a derivation unit 230 configured to derive any one piece of information between a flow rate and a pressure drop of the non-Newtonian fluid in the flow field from the other piece of information, based on the flow numbers in the flow field and the viscosity behavior information. The flow number storage unit 210 and the viscosity behavior information storage unit 220 may be implemented as a nonvolatile memory, volatile memory, flash memory, hard disk drive (HDD) or solid state drive (SSD), which can store various data. The derivation unit 230 may be a program module or software including a computing algorithm that generates new data by using and processing the various data stored in the flow number storage unit 210 and the viscosity behavior information storage unit 220.

The flow number storage unit 210 may store a coefficient $K_p$ of energy dissipation rate and a coefficient $K_s$ of effective shear rate, which are acquired for the corresponding flow field system in advance. Since the method for calculating the coefficient $K_p$ of energy dissipation rate and the coefficient $K_s$ of effective shear rate has been described above, the detailed descriptions thereof are omitted herein.

The viscosity behavior information storage unit 220 may store the viscosity behavior curve of FIG. 1, which shows the viscosity-effective shear rate relationship of the non-Newtonian fluid as the target of prediction, and viscosity-effective shear rate coordinate information of the viscosity behavior curve.

The derivation unit 230 may calculate a pressure drop corresponding to the flow rate of the non-Newtonian fluid or a flow rate corresponding to the pressure drop of the non-Newtonian fluid, using one or more of Equations 6, 7 and 8 described above.

The derivation unit 230 may derive pressure drop information corresponding to the flow rate information of the non-Newtonian fluid or flow rate information corresponding to the pressure drop information of the non-Newtonian fluid, using a functional relation equation including a pressure drop variable and variables which can be derived based on the flow rate of the non-Newtonian fluid in the flow field, or table data indicating the relationship between flow rate information and pressure drop information of the non-Newtonian fluid in the flow field.

The derivation unit 230 may include: an effective shear rate calculation unit 231 configured to calculate the effective shear rate using the relationship between the apparent shear rate and the coefficient $K_s$ of effective shear rate; an effective viscosity calculation unit 232 configured to calculate an effective viscosity using the effective shear rate and the viscosity behavior; an effective Reynolds number calculation unit 233 configured to calculate an effective Reynolds number using the effective viscosity and the relationship between the average velocity, density and viscosity of the fluid and the characteristic length of the flow field; a power number calculation unit 234 configured to calculate a power number using the coefficient $K_s$ of effective shear rate and the effective Reynolds number; and a total power calculation unit 235 configured to calculate total stress power using the average velocity and density of the fluid, the apparent shear rate, the volume of the fluid in the flow field, and the power number.

The total power calculation unit 235 may calculate the relationship between flow rate and pressure drop of the non-Newtonian fluid in the flow field, based on the calculated total stress power.

The derivation unit 230 may further include a flow rate information utilization unit 236 configured to calculate one or more of the apparent shear rate and the average velocity of the fluid, through the flow rate information of the non-Newtonian fluid in the flow field.

One or more of the effective shear rate calculation unit 231, the effective Reynolds number calculation unit 233 and the total power calculation unit 235 may use the information derived by the flow rate information utilization unit 236.

The coefficient $K_p$ of energy dissipation rate and the coefficient $K_s$ of effective shear rate, which have been described above, may be a kind of flow numbers which do not have very much to do with the rheological properties of the fluid, and are related only to the shape of the system (flow field). Therefore, once the coefficient of energy dissipation rate and the coefficient of effective shear rate are calculated for a specific shape of flow field in advance, the flow characteristics of various complex fluids or specifically non-Newtonian fluid, such as the relationship between pressure drop and flow rate, can be quantified afterwards.

Therefore, since the relationship between pressure drop and flow rate of specific non-Newtonian fluid in a specific shape of fluid field can be easily quantified, the quantified information between pressure drop and flow rate, which is referred to as the die characteristics of an extrusion die used for processing polymer, may be used to easily derive the optimal process.

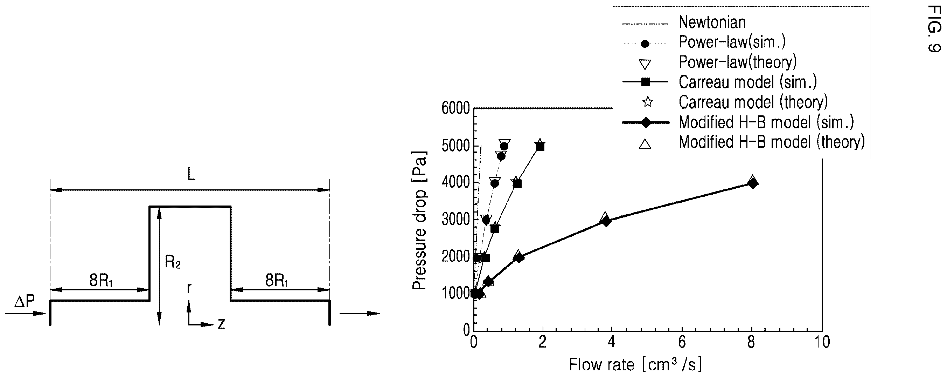

FIG. 9 illustrates that results obtained by simulating pressure drops corresponding to random flow rates for flows in expanded/contracted circular pipes through flow analysis almost coincide with results obtained by predicting pressure drops corresponding to random flow rates using the method and/or system for predicting a flow rate or pressure drop of non-Newtonian fluid in accordance with the aspect of the another embodiment not part of the claimed invention.

The non-Newtonian fluid model used herein may include a total of three kinds of models, that is, a power-law model, a Carreau model and a modified H-B model.

The flows in the expanded/contracted circular pipes in FIG. 9 may have the following flow number information.

Coefficient $K_p$ of energy dissipation rate = 86, and coefficient $K_s$ of effective shear rate = 0.71

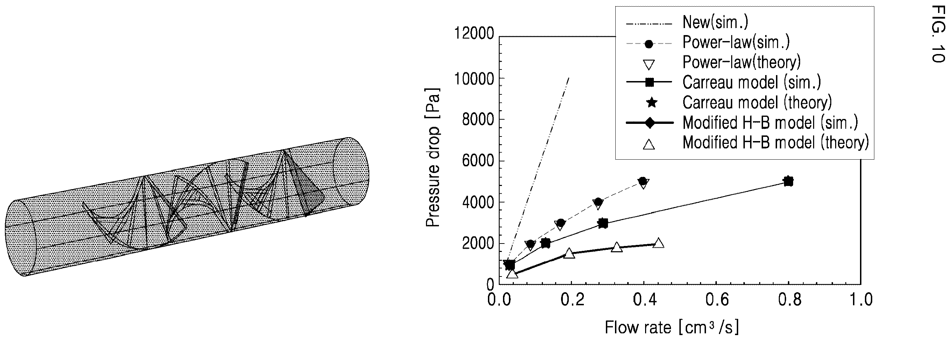

FIG. 10 illustrates that results obtained by simulating pressure drops corresponding to random flow rates for flows in a "Kenics static mixer" through flow analysis almost coincide with the results (certain result) obtained by predicting pressure drops corresponding to random flow rates using the method and/or system for predicting a flow rate or pressure drop of non-Newtonian fluid in accordance with the aspect of the another embodiment not part of the claimed invention.

The non-Newtonian fluid model used herein may include a total of three kinds of models, that is, the power-law model, the Carreau model and the modified H-B model.

The flows in the "Kenics static mixer" in FIG. 10 may have the following flow number information.

Coefficient $K_p$ of energy dissipation rate = 16.13, and coefficient $K_s$ of effective shear rate = 1.77

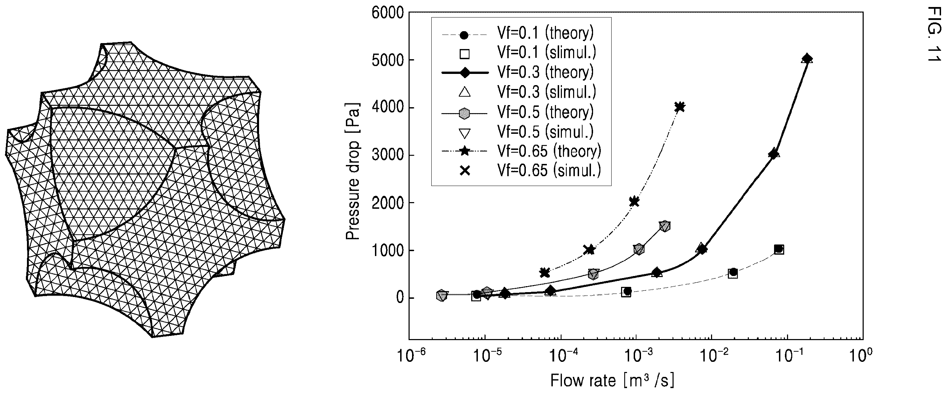

FIG. 11 illustrates that results obtained by simulating pressure drops corresponding to random flow rates for flows in a "porous medium with a body-centered cubic (BCC) structure" through flow analysis almost coincide with the results obtained by predicting pressure drops corresponding to random flow rates using the method and/or system for predicting a flow rate or pressure drop of non-Newtonian fluid in accordance with the aspect of the another embodiment not part of the claimed invention.

The non-Newtonian fluid model used herein is the power-law model.

The flows corresponding to respective volume fractions vf within the "porous medium with a BCC structure" in FIG. 11 may have the following flow number information.

Vf=0.1: coefficient $K_p$ of energy dissipation rate = 2.34, and coefficient $K_s$ of effective shear rate = 1.29

Vf=0.3: coefficient $K_p$ of energy dissipation rate = 5.78, and coefficient $K_s$ of effective shear rate = 1.05

Vf=0.5: coefficient $K_p$ of energy dissipation rate = 9.94, and coefficient $K_s$ of effective shear rate = 0.9

Vf=0.65: coefficient $K_p$ of energy dissipation rate = 13.58, and coefficient $K_s$ of effective shear rate = 0.83

The above-described embodiments are only some examples of the present disclosure, and the scope of the present disclosure is defined by the appended claims. For example, components or features described in a specific embodiment may be distributed and embodied, and components or features described in different embodiments may be coupled to each other and embodied. Furthermore, it should be understood that the above-described embodiments belong to the scope of the present disclosure.

## Claims

1. A method for measuring viscosity in continuous flow field of arbitrary geometry having at least one inlet and outlet, the method comprising:

   preparing two flow numbers $K_p$ and $K_s$ in the flow field;
   measuring a flow rate and pressure drop of fluid in the flow field; and
   calculating an average energy dissipation rate using the flow rate and the pressure drop, and deriving the viscosity of the fluid for an effective shear rate based on the average energy dissipation rate and the flow numbers in the flow field,
   wherein the deriving of the viscosity of the fluid comprises deriving the viscosity of the fluid for the effective shear rate using Equations 1 and 2 below:

$$[\text{Equation 1}]$$

$$\mu(\dot{\gamma}_{eff}) = \frac{\overline{\epsilon}}{K_p \bullet (\dot{\gamma}_{eff})^2}$$

$$[\text{Equation 2}]$$

$$\dot{\gamma}_{eff} = K_s \bullet \dot{\gamma}_{app}$$

   where $\epsilon$ with a bar above represents the average energy dissipation rate of the flow field as a function of the flow rate, the pressure drop and the volume of the flow field, $\dot{\gamma}_{eff}$ represents an effective shear rate of the flow field, $\mu(\dot{\gamma}_{eff})$ represents the viscosity of the fluid, $\dot{\gamma}_{app}$ represents an apparent shear rate of the flow field, $K_p$ represents a coefficient of energy dissipation rate, and $K_s$ represents a coefficient of effective shear rate

2. The method of claim 1, wherein the continuous flow field has a plurality of inlets and a single outlet,

   wherein the deriving of the viscosity of the fluid comprises calculating a total energy dissipation rate using Equation A below, and calculating the average energy dissipation rate based on the total energy dissipation rate and the volume of the flow field:

$$[\text{Equation A}]$$

$$\sum_{i=1}^{n} \Delta p_i Q_i^{inlet} = total\ energy\ dissipation\ rate$$

where n represents the number of the inlets, $\Delta p_i$ represents pressure drops of the fluid between the respective inlets and the single outlet, and $Q_i^{inlet}$ represents the flow rates of the fluid at the respective inlets.

3. The method of claim 1, wherein the continuous flow field has a single inlet and a plurality of outlets,

wherein the deriving of the viscosity of the fluid comprises calculating a total energy dissipation rate using Equation B below, and calculating the average energy dissipation rate based on the total energy dissipation rate and the volume of the flow field:

[Equation B]
$$\sum_{i=1}^{n} \Delta p_i Q_i^{outlet} = total\ energy\ dissipation\ rate$$

where n represents the number of the outlets, $\Delta p_i$ represents pressure drops of the fluid between the single inlet and the respective outlets, and $Q_i^{outlet}$ represents the flow rates of the fluid at the respective outlets.

4. The method of claim 1, wherein the preparing of the flow numbers in the flow field comprises acquiring the coefficient of energy dissipation rate in advance,

wherein the acquiring of the coefficient of energy dissipation rate in advance comprises:

a) injecting Newtonian fluid, whose viscosity is known, into the flow field;

measuring a flow rate and pressure drop of the Newtonian fluid in the flow field;
calculating an average energy dissipation rate of the Newtonian fluid, using the flow rate and the pressure drop of the Newtonian fluid;
calculating a Reynolds number and a power number using a density, average velocity and viscosity of the Newtonian fluid, a characteristic length of the flow field, an apparent shear rate of the Newtonian fluid, and the average energy dissipation rate of the Newtonian fluid; and
calculating the coefficient of energy dissipation rate using the relationship among the Reynolds number, the power number and the coefficient of energy dissipation rate, or
b) calculating a velocity field of the flow field using Newtonian fluid;
calculating a local energy dissipation rate by multiplying a viscosity of the Newtonian fluid by the square of a shear rate at a micro point of the flow field;
calculating a total energy dissipation rate by integrating the local energy dissipation rate for the entire flow field;
calculating an average energy dissipation rate of the Newtonian fluid by dividing the total energy dissipation rate by the volume of the flow field;
calculating a Reynolds number and a power number using a density, average velocity and viscosity of the Newtonian fluid, a characteristic length of the flow field, an apparent shear rate of the Newtonian fluid, and the average energy dissipation rate of the Newtonian fluid; and
calculating the coefficient of energy dissipation rate using the relationship among the Reynolds number, the power number and the coefficient of energy dissipation rate.

5. The method of claim 1, wherein the preparing of the flow numbers in the flow field comprises acquiring the coefficient of effective shear rate in advance,

wherein the acquiring of the coefficient of effective shear rate in advance comprises:

a) injecting non-Newtonian fluid, whose viscosity behavior is known, into the flow field;

measuring a flow rate and pressure drop of the non-Newtonian fluid in the flow field;
calculating an average energy dissipation rate and power number of the non-Newtonian fluid, using the flow rate and the pressure drop of the non-Newtonian fluid;
finding a Reynolds number of Newtonian fluid, corresponding to a power number of the Newtonian fluid, which is equal to the power number of the non-Newtonian fluid, and considering the Reynolds number of the Newtonian fluid as an effective Reynolds number;

calculating a viscosity of the non-Newtonian fluid using the effective Reynolds number, a density and average velocity of the non-Newtonian fluid, and a characteristic length of the flow field, and considering the viscosity as an effective viscosity;

calculating an effective shear rate of the flow field using the effective viscosity and the viscosity behavior; and calculating the coefficient of effective shear rate using the relationship between the effective shear rate and an apparent shear rate, or

b) performing flow analysis using non-Newtonian fluid whose viscosity behavior is known;

calculating a local energy dissipation rate by multiplying a viscosity of the non-Newtonian fluid by the square of a shear rate at a micro point of the flow field;

calculating a total energy dissipation rate by integrating the local energy dissipation rate for the entire flow field;

calculating an average energy dissipation rate of the non-Newtonian fluid by dividing the total energy dissipation rate by the volume of the flow field;

calculating a power number using the density, average velocity and apparent shear rate of the non-Newtonian fluid, and the average energy dissipation rate;

finding a Reynolds number of Newtonian fluid, corresponding to a power number of the Newtonian fluid, which is equal to the power number of the non-Newtonian fluid, and considering the Reynolds number of the Newtonian fluid as an effective Reynolds number;

calculating a viscosity of the non-Newtonian fluid using the effective Reynolds number, a density and average velocity of the non-Newtonian fluid, and a characteristic length of the flow field, and considering the viscosity as an effective viscosity;

calculating an effective shear rate of the flow field using the effective viscosity and the viscosity behavior; and calculating the coefficient of effective shear rate using the relationship between the effective shear rate and the apparent shear rate.

6. A system (100) for measuring viscosity in a continuous flow field of arbitrary geometry having at least one inlet and outlet, the system comprising:

a flow number storage unit (110) configured to store two flow numbers $K_p$ and $K_S$ in the flow field;

a flow rate measurement unit (120) configured to measure a flow rate of fluid in the flow field;

a pressure measurement unit (130) configured to calculate a pressure drop in the flow field; and

a derivation unit (140) configured to calculate an average energy dissipation rate using the measured flow rate and pressure drop, and derive the viscosity of the fluid for an effective shear rate based on the average energy dissipation rate and the flow numbers in the flow field,

wherein the derivation unit derives the viscosity of the fluid for the effective shear rate using Equations 1 and 2 below:

[Equation 1]

$$\mu(\dot{\gamma}_{eff}) = \frac{\bar{\epsilon}}{K_p \cdot (\dot{\gamma}_{eff})^2}$$

[Equation 2]

$$\dot{\gamma}_{eff} = K_s \cdot \dot{\gamma}_{app}$$

where $\epsilon$ with a bar above represents the average energy dissipation rate of the flow field as a function of the flow rate, the pressure drop and the volume of the flow field, $\dot{\gamma}_{eff}$ represents an effective shear rate of the flow field, $\mu(\dot{\gamma}_{eff})$ represents the viscosity of the fluid, $\dot{\gamma}_{app}$ represents an apparent shear rate of the flow field, $K_p$ represents a coefficient of energy dissipation rate, and $K_s$ represents a coefficient of effective shear rate.

7. The system (100) of claim 6, wherein the continuous flow field has a plurality of inlets and a single outlet,

wherein the derivation unit calculates a total energy dissipation rate using Equation A below, and calculates the average energy dissipation rate based on the total energy dissipation rate and the volume of the flow field:

**[Equation A]**

$$\sum_{i=1}^{n} \Delta p_i Q_i^{inlet} = total\ energy\ dissipation\ rate$$

where n represents the number of the inlets, $\Delta p_i$ represents pressure drops of the fluid between the respective inlets and the single outlet, and $Q_i^{inlet}$ represents the flow rates of the fluid at the respective inlets.

8. The system (100) of claim 6, wherein the continuous flow field has a single inlet and a plurality of outlets,

wherein the derivation unit calculates a total energy dissipation rate using Equation B below, and calculates the average energy dissipation rate based on the total energy dissipation rate and the volume of the flow field:

**[Equation B]**

$$\sum_{i=1}^{n} \Delta p_i Q_i^{outlet} = total\ energy\ dissipation\ rate$$

where n represents the number of the outlets, $\Delta p_i$ represents pressure drops of the fluid between the single inlet and the respective outlets, and $Q_i^{outlet}$ represents the flow rates of the fluid at the respective outlets.

**Patentansprüche**

1. Verfahren zum Messen der Viskosität in einem kontinuierlichen Strömungsfeld beliebiger Geometrie mit wenigstens einem Einlass und einem Auslass, wobei das Verfahren umfasst:

Erstellen zweier Strömungszahlen $K_p$ und $K_s$ im Strömungsfeld,
Messen der Strömungsgeschwindigkeit und des Druckabfalls des Fluids im Strömungsfeld und
Berechnen einer durchschnittlichen Energiedissipationsrate unter Verwendung der Strömungsgeschwindigkeit und des Druckabfalls, und Ableiten der Viskosität des Fluids für eine effektive Schergeschwindigkeit auf Grundlage der durchschnittlichen Energiedissipationsrate und der Strömungszahlen im Strömungsfeld,
wobei das Ableiten der Viskosität des Fluids das Ableiten der Viskosität des Fluids für die effektive Schergeschwindigkeit unter Verwendung der nachstehenden Gleichungen 1 und 2 umfasst:

**[Gleichung 1]**

$$\mu(\dot{\gamma}_{eff}) = \frac{\bar{\epsilon}}{K_p \bullet (\dot{\gamma}_{eff})^2}$$

**[Gleichung 2]**

$$\dot{\gamma}_{eff} = K_s \bullet \dot{\gamma}_{app}$$

wobei $\epsilon$ mit einem Balken darüber für die durchschnittliche Energiedissipationsrate des Strömungsfeldes in Abhängigkeit der Strömungsgeschwindigkeit, des Druckabfalls und des Volumens des Strömungsfeldes steht, $\dot{\gamma}_{eff}$ für eine effektive Schergeschwindigkeit des Strömungsfeldes steht, $\mu(\dot{\gamma}_{eff})$ für die Viskosität des Fluids steht, $\dot{\gamma}_{app}$ für eine scheinbare Schergeschwindigkeit des Strömungsfeldes steht, $K_p$ für einen Koeffizienten der Energiedissipationsrate steht und $K_s$ für einen Koeffizienten der effektiven Schergeschwindigkeit steht.

2. Verfahren nach Anspruch 1, wobei das kontinuierliche Strömungsfeld eine Vielzahl von Einlässen und einen einzelnen Auslass aufweist,

wobei das Ableiten der Viskosität des Fluids das Berechnen einer gesamten Energiedissipationsrate unter Verwendung der nachstehenden Gleichung A und das Berechnen der durchschnittlichen Energiedissipationsrate auf Grundlage der gesamten Energiedissipationsrate und des Volumens des Strömungsfeldes umfasst:

[Gleichung A]

$$\sum_{i=1}^{n} \Delta p_i Q_i^{Einlass} = \text{gesamte Energiedissipationsrate}$$

wobei n für die Anzahl der Einlässe steht, $\Delta p_i$ für die Druckverluste des Fluids zwischen den jeweiligen Einlässen und dem einzelnen Auslass steht und $Q_i^{inlet}$ für die Strömungsgeschwindigkeiten des Fluids an den jeweiligen Einlässen steht.

3.  Verfahren nach Anspruch 1, wobei das kontinuierliche Strömungsfeld einen einzelnen Einlass und eine Vielzahl von Auslässen aufweist,

wobei das Ableiten der Viskosität des Fluids das Berechnen einer gesamten Energiedissipationsrate unter Verwendung der nachstehenden Gleichung B und das Berechnen der durchschnittlichen Energiedissipationsrate auf Grundlage der gesamten Energiedissipationsrate und des Volumens des Strömungsfeldes umfasst:

[Gleichung B]

$$\sum_{i=1}^{n} \Delta p_i Q_i^{Auslass} = \text{gesamte Energiedissipationsrate}$$

wobei n für die Anzahl der Auslässe steht, $\Delta p_i$ für die Druckabfälle des Fluids zwischen dem einzelnen Einlass und den jeweiligen Auslässen steht und $Q_i^{outlet}$ für die Strömungsgeschwindigkeiten des Fluids an den jeweiligen Auslässen steht.

4.  Verfahren nach Anspruch 1, wobei das Erstellen der Strömungszahlen im Strömungsfeld das vorherige Erfassen des Koeffizienten der Energiedissipationsrate umfasst,

wobei das vorherige Erfassen des Koeffizienten der Energiedissipationsrate umfasst:

a) Einspritzen eines newtonschen Fluids, dessen Viskosität bekannt ist, in das Strömungsfeld,

Messen der Strömungsgeschwindigkeit und des Druckabfalls des newtonschen Fluids im Strömungsfeld, Berechnen einer durchschnittlichen Energiedissipationsrate des newtonschen Fluids unter Verwendung der Strömungsgeschwindigkeit und des Druckabfalls des newtonschen Fluids, Berechnen einer Reynoldszahl und einer Leistungszahl unter Verwendung einer Dichte, einer mittleren Geschwindigkeit und einer Viskosität des newtonschen Fluids, einer charakteristischen Länge des Strömungsfeldes, einer scheinbaren Schergeschwindigkeit des newtonschen Fluids und der durchschnittlichen Energiedissipationsrate des newtonschen Fluids, und Berechnen des Koeffizienten der Energiedissipationsrate unter Verwendung der Beziehung zwischen der Reynoldszahl, der Leistungszahl und dem Koeffizienten der Energiedissipationsrate, oder b) Berechnen eines Geschwindigkeitsfeldes des Strömungsfeldes unter Verwendung eines newtonschen Fluids, Berechnen einer lokalen Energiedissipationsrate durch Multiplizieren einer Viskosität des newtonschen Fluids mit dem Quadrat einer Schergeschwindigkeit an einem Mikropunkt des Strömungsfeldes, Berechnen einer gesamten Energiedissipationsrate durch Integrieren der lokalen Energiedissipationsrate für das gesamte Strömungsfeld, Berechnen einer durchschnittlichen Energiedissipationsrate des newtonschen Fluids durch Dividieren der gesamten Energiedissipationsrate durch das Volumen des Strömungsfeldes,
Berechnen einer Reynoldszahl und einer Leistungszahl unter Verwendung einer Dichte, einer mittleren Geschwindigkeit und einer Viskosität des newtonschen Fluids, einer charakteristischen Länge des Strömungsfeldes, einer scheinbaren Schergeschwindigkeit des newtonschen Fluids und der durchschnittlichen Energiedissipationsrate des newtonschen Fluids, und
Berechnen des Koeffizienten der Energiedissipationsrate unter Verwendung der Beziehung zwischen der Reynoldszahl, der Leistungszahl und dem Koeffizienten der Energiedissipationsrate.

5. Verfahren nach Anspruch 1, wobei das Erstellen der Strömungszahlen im Strömungsfeld das vorherige Erfassen des Koeffizienten der effektiven Schergeschwindigkeit umfasst,

wobei das vorherige Erfassen des Koeffizienten der effektiven Schergeschwindigkeit umfasst:

a) Einspritzen eines nicht-newtonschen Fluids, dessen Viskositätsverhalten bekannt ist, in das Strömungsfeld,

Messen der Strömungsgeschwindigkeit und des Druckabfalls des nicht-newtonschen Fluids im Strömungsfeld,
Berechnen einer durchschnittlichen Energiedissipationsrate und einer Leistungszahl des nicht-newtonschen Fluids unter Verwendung der Strömungsgeschwindigkeit und des Druckabfalls des nicht-newtonschen Fluids,
Ermitteln einer Reynoldszahl des newtonschen Fluids, die einer Leistungszahl des newtonschen Fluids entspricht, die gleich der Leistungszahl des nicht-newtonschen Fluids ist, und Berücksichtigen der Reynoldszahl des newtonschen Fluids als effektive Reynoldszahl,
Berechnen einer Viskosität des nicht-newtonschen Fluids unter Verwendung der effektiven Reynoldszahl, einer Dichte und durchschnittlichen Geschwindigkeit des nicht-newtonschen Fluids und einer charakteristischen Länge des Strömungsfeldes sowie Berücksichtigen der Viskosität als effektive Viskosität,
Berechnen einer effektiven Schergeschwindigkeit des Strömungsfeldes unter Verwendung der effektiven Viskosität und des Viskositätsverhaltens, und
Berechnen des Koeffizienten der effektiven Schergeschwindigkeit unter Verwendung der Beziehung zwischen der effektiven Schergeschwindigkeit und einer scheinbaren Schergeschwindigkeit, oder
b) Durchführen einer Strömungsanalyse unter Verwendung eines nicht-newtonschen Fluids, dessen Viskositätsverhalten bekannt ist,
Berechnen einer lokalen Energiedissipationsrate durch Multiplizieren einer Viskosität des nicht-newtonschen Fluids mit dem Quadrat einer Schergeschwindigkeit an einem Mikropunkt des Strömungsfeldes,
Berechnen einer gesamten Energiedissipationsrate durch Integrieren der lokalen Energiedissipationsrate für das gesamte Strömungsfeld,
Berechnen einer durchschnittlichen Energiedissipationsrate des nicht-newtonschen Fluids durch Dividieren der gesamten Energiedissipationsrate durch das Volumen des Strömungsfeldes,
Berechnen einer Leistungszahl unter Verwendung der Dichte, der durchschnittlichen Geschwindigkeit und der scheinbaren Schergeschwindigkeit des nicht-newtonschen Fluids sowie der durchschnittlichen Energiedissipationsrate,
Ermitteln einer Reynoldszahl des newtonschen Fluids, die einer Leistungszahl des newtonschen Fluids entspricht, die gleich der Leistungszahl des nicht-newtonschen Fluids ist, und Berücksichtigen der Reynoldszahl des newtonschen Fluids als effektive Reynoldszahl,
Berechnen einer Viskosität des nicht-newtonschen Fluids unter Verwendung der effektiven Reynoldszahl, einer Dichte und durchschnittlichen Geschwindigkeit des nicht-newtonschen Fluids und einer charakteristischen Länge des Strömungsfeldes sowie Berücksichtigen der Viskosität als effektive Viskosität,
Berechnen einer effektiven Schergeschwindigkeit des Strömungsfeldes unter Verwendung der effektiven Viskosität und des Viskositätsverhaltens, und
Berechnen des Koeffizienten der effektiven Schergeschwindigkeit unter Verwendung der Beziehung zwischen der effektiven Schergeschwindigkeit und der scheinbaren Schergeschwindigkeit.

6. System (100) zum Messen der Viskosität in einem kontinuierlichen Strömungsfeld beliebiger Geometrie mit wenigstens einem Einlass und einem Auslass, wobei das System umfasst:

eine Strömungszahlspeichereinheit (110), die dazu ausgelegt ist, zwei Strömungszahlen $K_p$ und Ks in dem Strömungsfeld zu speichern,
eine Strömungsgeschwindigkeitsmesseinheit (120), die dazu ausgelegt ist, eine Strömungsgeschwindigkeit eines Fluids im Strömungsfeld zu messen,

eine Druckmesseinheit (130), die dazu ausgelegt ist, einen Druckabfall in dem Strömungsfeld zu berechnen, und eine Ableiteinheit (140), die dazu ausgelegt ist eine durchschnittliche Energiedissipationsrate unter Verwendung der gemessenen Strömungsgeschwindigkeit und des Druckabfalls zu berechnen und die Viskosität des Fluids für eine effektive Schergeschwindigkeit auf Grundlage der durchschnittlichen Energiedissipationsrate und der Strömungszahlen in dem Strömungsfeld abzuleiten,

wobei die Ableiteinheit die Viskosität des Fluids für die effektive Schergeschwindigkeit unter Verwendung der nachstehenden Gleichungen 1 und 2 ableitet:

[Gleichung 1]

$$\mu(\dot{\gamma}_{eff}) = \frac{\bar{\epsilon}}{K_p \cdot (\dot{\gamma}_{eff})^2}$$

[Gleichung 2]

$$\dot{\gamma}_{eff} = K_s \cdot \dot{\gamma}_{app}$$

wobei $\epsilon$ mit einem Balken darüber für die durchschnittliche Energiedissipationsrate des Strömungsfeldes in Abhängigkeit der Strömungsgeschwindigkeit, des Druckabfalls und des Volumens des Strömungsfeldes steht, $\dot{\gamma}_{eff}$ für eine effektive Schergeschwindigkeit des Strömungsfeldes steht, $\mu(\dot{\gamma}_{eff})$ für die Viskosität des Fluids steht, $\dot{\gamma}_{app}$ für eine scheinbare Schergeschwindigkeit des Strömungsfeldes steht, $K_p$ für einen Koeffizienten der Energiedissipationsrate steht und $K_s$ für einen Koeffizienten der effektiven Schergeschwindigkeit steht.

7. System (100) nach Anspruch 6, wobei das kontinuierliche Strömungsfeld eine Vielzahl von Einlässen und einen einzelnen Auslass aufweist,

wobei die Ableiteinheit eine gesamte Energiedissipationsrate unter Verwendung der nachstehenden Gleichung A berechnet und die durchschnittliche Energiedissipationsrate auf Grundlage der gesamten Energiedissipationsrate und des Volumens des Strömungsfeldes berechnet:

[Gleichung A]

$$\sum_{i=1}^{n} \Delta p_i Q_i^{Einlass} = \text{gesamte Energiedissipationsrate}$$

wobei n für die Anzahl der Einlässe steht, $\Delta p_i$ für die Druckverluste des Fluids zwischen den jeweiligen Einlässen und dem einzelnen Auslass steht und $Q_i^{inlet}$ für die Strömungsgeschwindigkeiten des Fluids an den jeweiligen Einlässen steht.

8. System (100) nach Anspruch 6, wobei das kontinuierliche Strömungsfeld einen einzelnen Einlass und eine Vielzahl von Auslässen aufweist,

wobei die Ableiteinheit eine gesamte Energiedissipationsrate unter Verwendung der nachstehenden Gleichung B berechnet und die durchschnittliche Energiedissipationsrate auf Grundlage der gesamten Energiedissipationsrate und des Volumens des Strömungsfeldes berechnet:

[Gleichung B]

$$\sum_{i=1}^{n} \Delta p_i Q_i^{Auslass} = \text{gesamte Energiedissipationsrate}$$

wobei n für die Anzahl der Auslässe steht, $\Delta p_i$ für die Druckabfälle des Fluids zwischen dem einzelnen Einlass und den jeweiligen Auslässen steht und $Q_i^{outlet}$ für die Strömungsgeschwindigkeiten des Fluids an den jeweiligen Auslässen steht.

**Revendications**

1.  Procédé de mesure de la viscosité dans un champ d'écoulement continu de géométrie arbitraire comportant au moins une entrée et une sortie, le procédé comprenant :

    la préparation de deux nombres d'écoulement$_{Kp}$ et$_{Ks}$ dans le champ d'écoulement,
    la mesure d'un débit et de la perte de charge d'un fluide dans le champ d'écoulement et
    le calcul d'un taux de dissipation d'énergie moyen en utilisant le débit et la perte de charge et la déduction de la viscosité du fluide pour un taux de cisaillement effectif sur la base du taux de dissipation d'énergie moyen et des nombres d'écoulement dans le champ d'écoulement,
    la déduction de la viscosité du fluide comprenant la déduction de la viscosité du fluide pour le taux de cisaillement effectif à l'aide des équations 1 et 2 ci-dessous

    [équation 1]

    $$\mu(\dot{\gamma}_{eff}) = \frac{\bar{\epsilon}}{K_p \bullet (\dot{\gamma}_{eff})^2}$$

    [équation 2]

    $$\dot{\gamma}_{eff} = K_s \bullet \dot{\gamma}_{app}$$

    ε avec une barre au-dessus représentant le taux de dissipation d'énergie moyen du champ d'écoulement en fonction du débit, de la perte de charge et du volume du champ d'écoulement, $\dot{\gamma}_{eff}$ représentant un taux de cisaillement effectif du champ d'écoulement, $\mu(\dot{\gamma}_{eff})$ représentant la viscosité du fluide, $\dot{\gamma}_{app}$ représentant un taux de cisaillement apparent du champ d'écoulement,$_{Kp}$ représentant un coefficient du taux de dissipation d'énergie et$_{Ks}$ représentant un coefficient du taux de cisaillement effectif.

2.  Procédé selon la revendication 1, le champ d'écoulement continu comportant plusieurs entrées et une seule sortie,

    la déduction de la viscosité du fluide comprenant le calcul d'un taux de dissipation d'énergie total à l'aide de l'équation A ci-dessous et le calcul du taux de dissipation d'énergie moyen sur la base du taux de dissipation d'énergie total et du volume du champ d'écoulement :

    [équation A]

    $$\sum_{i=1}^{n} \Delta p_i Q_i^{entrée} = \text{ taux de dissipation d'énergie total}$$

    n représentant le nombre d'entrées, $\Delta_{pi}$ représentant les pertes de charge du fluide entre les entrées respectives et la sortie unique et $Q_i^{inlet}$ représentant les débits du fluide aux entrées respectives.

3.  Procédé selon la revendication 1, le champ d'écoulement continu comportant une seule entrée et plusieurs sorties,

    la déduction de la viscosité du fluide comprenant le calcul d'un taux de dissipation d'énergie total à l'aide de l'équation B ci-dessous et le calcul du taux de dissipation d'énergie moyen sur la base du taux de dissipation d'énergie total et du volume du champ d'écoulement :

[équation B]

$$\sum_{i=1}^{n} \Delta p_i Q_i^{sortie} = taux\ de\ dissipation\ d'énergie\ total$$

n représentant le nombre de sorties, $\Delta p_i$ représentant les pertes de charge du fluide entre l'entrée unique et les sorties respectives et $Q_i^{outlet}$ représentant les débits du fluide aux sorties respectives.

**4.** Procédé selon la revendication 1, la préparation des nombres d'écoulements dans le champ d'écoulement comprenant l'acquisition préalable du coefficient du taux de dissipation d'énergie,

l'acquisition préalable du coefficient du taux de dissipation d'énergie comprenant :

a) l'injection d'un fluide newtonien, dont la viscosité est connue, dans le champ d'écoulement,

la mesure d'un débit et de la perte de charge du fluide newtonien dans le champ d'écoulement,
le calcul d'un taux de dissipation d'énergie moyen du fluide newtonien en utilisant le débit et la perte de charge du fluide newtonien,
le calcul d'un nombre de Reynolds et d'un nombre de puissance en utilisant une densité, une vitesse moyenne et une viscosité du fluide newtonien, une longueur caractéristique du champ d'écoulement, un taux de cisaillement apparent du fluide newtonien et le taux de dissipation d'énergie moyen du fluide newtonien et
le calcul du coefficient du taux de dissipation d'énergie en utilisant la relation entre le nombre de Reynolds, le nombre de puissance et le coefficient du taux de dissipation d'énergie ou
b) le calcul d'un champ de vitesse du champ d'écoulement en utilisant le fluide newtonien,
le calcul d'un taux de dissipation d'énergie local en multipliant une viscosité du fluide newtonien par le carré d'un taux de cisaillement à un micro-point du champ d'écoulement,
le calcul d'un taux de dissipation d'énergie total en intégrant le taux de dissipation d'énergie local pour l'ensemble du champ d'écoulement,
le calcul d'un taux de dissipation d'énergie moyen du fluide newtonien en divisant le taux de dissipation d'énergie total par le volume du champ d'écoulement,
le calcul d'un nombre de Reynolds et d'un nombre de puissance en utilisant une densité, une vitesse moyenne et une viscosité du fluide newtonien, une longueur caractéristique du champ d'écoulement, un taux de cisaillement apparent du fluide newtonien et le taux de dissipation d'énergie moyen du fluide newtonien et
le calcul du coefficient du taux de dissipation d'énergie en utilisant la relation entre le nombre de Reynolds, le nombre de puissance et le coefficient du taux de dissipation d'énergie.

**5.** Procédé selon la revendication 1, la préparation des nombres d'écoulements dans le champ d'écoulement comprenant l'acquisition préalable du coefficient du taux de cisaillement effectif,

l'acquisition préalable du coefficient du taux de cisaillement effectif comprenant :

a) l'injection d'un fluide non newtonien, dont le comportement en matière de viscosité est connu, dans le champ d'écoulement,

la mesure d'un débit et de la perte de charge du fluide non newtonien dans le champ d'écoulement,
le calcul d'un taux de dissipation d'énergie moyen et d'un nombre de puissance du fluide non newtonien en utilisant le débit et la perte de charge du fluide non newtonien,
la détermination d'un nombre de Reynolds du fluide newtonien, correspondant à un nombre de puissance du fluide newtonien, qui est égal au nombre de puissance du fluide non newtonien et la prise en compte du nombre de Reynolds du fluide newtonien comme un nombre de Reynolds effectif,
le calcul d'une viscosité du fluide non newtonien en utilisant le nombre de Reynolds effectif, une densité et une vitesse moyenne du fluide non newtonien, ainsi qu'une longueur caractéristique du champ d'écoulement, et la prise en compte de la viscosité comme une viscosité effective,

le calcul d'un taux de cisaillement effectif du champ d'écoulement en utilisant la viscosité effective et le comportement en matière de viscosité et

le calcul du coefficient du taux de cisaillement effectif en utilisant la relation entre le taux de cisaillement effectif et un taux de cisaillement apparent ou

b) la réalisation d'une analyse d'écoulement en utilisant un fluide non newtonien dont le comportement en matière de viscosité est connu,

le calcul d'un taux de dissipation d'énergie local en multipliant une viscosité du fluide non newtonien par le carré d'un taux de cisaillement à un micro-point du champ d'écoulement,

le calcul d'un taux de dissipation d'énergie total en intégrant le taux de dissipation d'énergie local pour l'ensemble du champ d'écoulement,

le calcul d'un taux de dissipation d'énergie moyen du fluide non newtonien en divisant le taux de dissipation d'énergie total par le volume du champ d'écoulement,

le calcul d'un nombre de puissance en utilisant la densité, la vitesse moyenne et le taux de cisaillement apparent du fluide non newtonien ainsi que le taux de dissipation d'énergie moyen,

la détermination d'un nombre de Reynolds du fluide newtonien, correspondant à un nombre de puissance du fluide newtonien, qui est égal au nombre de puissance du fluide non newtonien et la prise en compte du nombre de Reynolds du fluide newtonien comme un nombre de Reynolds effectif,

le calcul d'une viscosité du fluide non newtonien en utilisant le nombre de Reynolds effectif, une densité et une vitesse moyenne du fluide non newtonien, ainsi qu'une longueur caractéristique du champ d'écoulement, et la prise en compte de la viscosité comme une viscosité effective,

le calcul d'un taux de cisaillement effectif du champ d'écoulement en utilisant la viscosité effective et le comportement en matière de viscosité et

le calcul du coefficient du taux de cisaillement effectif en utilisant la relation entre le taux de cisaillement effectif et le taux de cisaillement apparent.

6. Système (100) pour mesurer la viscosité dans un champ d'écoulement continu de géométrie arbitraire comportant au moins une entrée et une sortie, le système comprenant :

   une unité de stockage des nombres d'écoulements (110), configurée pour stocker deux nombres d'écoulement$_{Kp}$ et$_{KS}$ dans le champ d'écoulement,

   une unité de mesure du débit (120), configurée pour mesurer le débit d'un fluide dans le champ d'écoulement,

   une unité de mesure de la pression (130), configurée pour calculer une perte de charge dans le champ d'écoulement et

   une unité de dérivation (140) configurée pour calculer un taux de dissipation d'énergie moyen en utilisant le débit et la perte de charge mesurés et pour déduire la viscosité du fluide pour un taux de cisaillement effectif sur la base du taux de dissipation d'énergie moyen et des nombres d'écoulements dans le champ d'écoulement, l'unité de dérivation calculant la viscosité du fluide pour le taux de cisaillement effectif à l'aide des équations 1 et 2 ci-dessous :

[équation 1]

$$\mu(\dot{\gamma}_{eff}) = \frac{\bar{\epsilon}}{K_p \cdot (\dot{\gamma}_{eff})^2}$$

[équation 2]

$$\dot{\gamma}_{eff} = K_s \cdot \dot{\gamma}_{app}$$

$\varepsilon$ avec une barre au-dessus représentant le taux de dissipation d'énergie moyen du champ d'écoulement en fonction du débit, de la perte de charge et du volume du champ d'écoulement, $\dot{\gamma}_{eff}$ représentant un taux de cisaillement effectif du champ d'écoulement, $\mu(\dot{\gamma}_{eff})$ représentant la viscosité du fluide, $\dot{\gamma}_{app}$ représentant un taux de cisaillement apparent du champ d'écoulement,$_{Kp}$ représentant un coefficient du taux de dissipation d'énergie et$_{Ks}$ représentant un coefficient du taux de cisaillement effectif.

7. Le système (100) selon la revendication 6, le champ d'écoulement continu comportant plusieurs entrées et une seule sortie,

l'unité de dérivation calculant un taux de dissipation d'énergie total à l'aide de l'équation A ci-dessous et calculant le taux de dissipation d'énergie moyen sur la base du taux de dissipation d'énergie total et du volume du champ d'écoulement

[équation A]
$$\sum_{i=1}^{n} \Delta p_i Q_i^{entée} = \ taux\ de\ dissipation\ d'énergie\ total$$

n représentant le nombre d'entrées, $\Delta p_i$ représentant les pertes de charge du fluide entre les entrées respectives et la sortie unique et $Q_i^{inlet}$ représentant les débits du fluide aux entrées respectives.

8. Le système (100) selon la revendication 6, le champ d'écoulement continu comportant une seule entrée et plusieurs sorties,

l'unité de dérivation calculant un taux de dissipation d'énergie total à l'aide de l'équation B ci-dessous et calculant le taux de dissipation d'énergie moyen sur la base du taux de dissipation d'énergie total et du volume du champ d'écoulement

[équation B]
$$\sum_{i=1}^{n} \Delta p_i Q_i^{sortie} = \ taux\ de\ dissipation\ d'énergie\ total$$

n représentant le nombre de sorties, $\Delta p_i$ représentant les pertes de charge du fluide entre l'entrée unique et les sorties respectives et $Q_i^{outlet}$ représentant les débits du fluide aux sorties respectives.

FIG. 1

FIG. 2

FIG. 3

FIG. 4

FIG. 5

<u>100</u>

| | |
|---|---|
| Flow Number Storage Unit | —110 |

| | |
|---|---|
| Derivation Unit | —140 |

120

130

131    132

Inlet

Outlet

FIG. 6

FIG. 7A

FIG. 7B

Legend:
- — ·· — Power-law-simul.(n=0.3)
- ● Power-law-theory (n=0.3)
- —— Power-law-simul.(n=0.5)
- ▲ Power-law-theory (n=0.5)
- —— Power-law-simul.(n=0.8)
- ◆ Power-law-theory (n=0.8)
- — · — Carreau_simul. (n=0.3)
- ★ Carreau_theory (n=0.3)
- – – – Carreau_simul. (n=0.5)
- ✕ Carreau_theory (n=0.5)

Y-axis: (Effective) viscosity
X-axis: (Effective) shear rate

FIG. 8

<u>200</u>

FIG. 9

FIG. 10

FIG. 11

**EP 3 614 123 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6412337 B

**Non-patent literature cited in the description**

- **DELAPLACE G. et al.** Power Requirement when Mixing a Shear-Thickening Fluid with a Helical Ribbon Impeller Type. *Chem. Eng. Technol.,* 2000, vol. 23 (4), 329-336